# EUROPÄISCHE PATENTSCHRIFT

(11) **EP 3 560 572 B1**
(45) Veröffentlichungstag und Bekanntmachung des Hinweises auf die Patenterteilung: **04.11.2020**
(21) Anmeldenummer: 19158808.6
(22) Anmeldetag: 22.02.2019
(51) Int. Cl.: B01D 19/00, A23L 2/54

(54) **ENTGASUNGSANLAGE UND VERFAHREN ZUM DURCHFÜHREN EINES ENTGASUNGSPROZESSES EINER FLÜSSIGKEIT UND GETRÄNKEBEHANDLUNGSMASCHINE**
DEGASSING SYSTEM AND METHOD FOR CARRYING OUT A DEGASIFICATION PROCESS OF A LIQUID AND DRINKS TREATMENT MACHINE
INSTALLATION DE DÉGAZAGE ET PROCÉDÉ DE MISE EN OEUVRE D'UN PROCÉDÉ DE DÉGAZAGE D'UN LIQUIDE ET MACHINE DE TRAITEMENT DES BOISSONS

(30) Priorität: 24.04.2018 DE 102018206313
(43) Veröffentlichungstag der Anmeldung: 30.10.2019
(73) Patentinhaber: KRONES Aktiengesellschaft, 93073 Neutraubling (DE)
(72) Erfinder: Justl, Johanna, 93073 Neutraubling (DE)
(74) Vertreter: Grünecker Patent- und Rechtsanwälte PartG mbB

(56) Entgegenhaltungen:
- DE-A1- 2 020 871
- DE-A1- 2 419 676
- DE-A1-102009 031 106
- GB-A- 638 198
- US-A- 5 203 890
- US-A- 5 266 481
- US-A1- 2018 016 143

## Beschreibung

Die vorliegende Erfindung betrifft eine Entgasungsanlage gemäß dem Oberbegriff des Anspruchs 1, ein Verfahren zum Durchführen eines Entgasungsprozesses einer Flüssigkeit gemäß Anspruch 9 und eine Getränkebehandlungsmaschine gemäß Anspruch 13.

### Stand der Technik

Offenlegungsschrift DE 20 20 871 offenbart ein Verfahren und eine Vorrichtung zur mindestens zweistufigen Vakuumentgasung von Flüssigkeiten. In einer ersten Entgasungsstufe kann die Flüssigkeit in bekannter Weise vorentgast werden. Anschließend wird die vorentgaste Flüssigkeit aufgeheizt und nach Beheizung in die zweite Entgasungsstufe übergeleitet. In der zweiten Entgasungsstufe werden aus der Flüssigkeit austretende gas- und dampfförmige Anteile in die erste Entgasungsstufe zurückgeführt und beide Entgasungsstufen über eine gemeinsame Vakuumpumpeinrichtung evakuiert.

Das "Handbuch der Fülltechnik - Grundlagen für das Abfüllen flüssiger Produkte" von S. Blüml et al. (Behr's Verlag, Hamburg, 2004; ISBN 3-89947-089-3) offenbart, dass die wichtigsten Techniken zur Entgasung von Wasser, das bei der Getränkeproduktion erforderlich ist, physikalische Verfahrensweisen sind, die Druckentgasung, Vakuumentgasung sowie kombinierte Druck- und Vakuumentgasung umfassen. Das Prinzip der Druckentgasung basiert auf dem Austragen der Sauerstoff- und Stickstoffanteile im Wasser durch die Zugabe von CO₂. Die Vakuumentgasung beruht auf einer Vakuumatmosphäre im Entgasungstank. Das zu entgasende Wasser wird durch Düsen in den Entgasungstank gesprüht und aufgrund des Unterdrucks wird der Sauerstoff- und Stickstoffanteil im Wasser ausgetragen und aus dem Tank abgesaugt.

DE 10 2009 031 106 A1 offenbart ein Verfahren und eine Vorrichtung zum Entgasen einer Flüssigkeit. In einem Unterdruckgehäuse kann die Flüssigkeit mittels einer Sprühentgasungseinrichtung versprüht und entgast werden. Diese Flüssigkeit kann dann innerhalb des Unterdruckgehäuses mittels eines Sensors dahingehend geprüft werden, welcher Gasanteil hierin noch vorhanden ist. Je nach den vom Sensor gemessenen Werten für den Gasgehalt sorgt die Steuereinheit dafür, dass die gesamte oder ein Teil der vom Gas ganz oder teilweise befreiten Flüssigkeit im Kreis geführt, über eine Rücklaufleitung einer zweiten Sprühentgasungseinrichtung zugeführt und nochmals entgast wird. Alternativ hierzu kann aber auch ein Teil oder die sämtliche im Unterdruckgehäuse befindliche Flüssigkeit über den Auslauf ausgeschleust und einer weiteren Verwendung zugeführt werden.

### Aufgabe

Die Aufgabe der Erfindung besteht darin, eine Entgasungsvorrichtung zur Verfügung zu stellen, die einen geringeren Medienverbrauch und eine erhöhte Lebensdauer einer Kreislaufpumpe ermöglicht und ein entsprechendes effizientes Verfahren, das unter Verwendung einer derartigen Entgasungsvorrichtung arbeitet.

### Lösung

Die Aufgabe wird gelöst durch die Entgasungsvorrichtung nach Anspruch 1, das Verfahren zum Durchführen eines Entgasungsprozesses einer Flüssigkeit nach Anspruch 9 und die Getränkebehandlungsmaschine nach Anspruch 13. Bevorzugte Ausführungsformen sind in den Unteransprüchen offenbart.

Eine erfindungsgemäße Entgasungsanlage umfasst eine Steuerungsvorrichtung, einen Entgasungsbehälter mit einem ersten Raumbereich, in den Flüssigkeit, z.B. mittels einer oder mehrerer Düsen, einbringbar ist, und einem zweiten Raumbereich, in den die Flüssigkeit aus dem ersten Raumbereich z.B. mittels einer oder mehrerer Düsen, einbringbar ist, wobei eine Leitung zwischen dem ersten Bereich und dem zweiten Bereich vorgesehen ist und wobei der erste Raumbereich und der zweite Raumbereich durch mindestens ein Trennelement teilweise voneinander getrennt sind. Eine ansteuerbare Pumpe ist vorgesehen, die dazu ausgelegt ist, bei einem Betreiben der Pumpe, für einen zweistufigen Vakuumentgasungsprozess Flüssigkeit von dem ersten Raumbereich durch die Leitung zu dem zweiten Raumbereich zu pumpen. Die Steuerungsvorrichtung ist dazu ausgelegt, die Pumpe derart zu steuern, dass die Pumpe für einen einstufigen Vakuumentgasungsprozess nicht betrieben wird und für einen zweistufigen Vakuumentgasungsprozess betrieben wird.

Durch die ansteuerbare Pumpe kann in einfacher Weise die Verwendung der Entgasungsanlage zwischen einem einstufigen und einem zweistufigen Vakuumentgasungsprozess variiert werden, wobei sich zudem eine erhöhte Lebensdauer der Pumpe ergeben kann und eine Steuerung beispielsweise abhängig von der Flüssigkeit oder unter der Verwendung der Flüssigkeit herzustellendem Produkt vorgenommen werden kann.

Zum Einbringen der Flüssigkeit in den ersten bzw. zweiten Raumbereich können neben einer oder mehreren Düsen jegliche Art von aus dem Stand der Technik bekannten Vorrichtungen verwendet werden, mit denen die Flüssigkeit fein verteilt werden kann, so dass diese Flüssigkeit eine möglichst große Oberfläche aufweist. Ebenso ist es denkbar, die Flüssigkeit unter Ausbildung eines Flüssigkeitsfilms in den ersten oder zweiten Raumbereich einzubringen.

Das mindestens eine Trennelement sollte derart ausgelegt sein, dass bei dem einstufigen Vakuumentgasungsprozess Flüssigkeit von dem ersten Raumbereich über das mindestens eine Trennelement in den zweiten Raumbereich überfließen kann, und dass bei dem zweistufigen Entgasungsprozess die Flüssigkeit durch das mindestens eine Trennelement in dem ersten Bereich gehalten wird.

Die Entgasungsanlage kann Mittel, wie eine oder mehrere Vakuumpumpen umfassen, um ein Vakuum in dem ersten und/oder zweiten Raumbereich auszubilden.

In dem ersten Raumbereich kann eine erste Zuleitung für ein erstes Strippgas vorgesehen sein, wobei die erste Zuleitung unterhalb oder oberhalb eines vorbestimmten ersten Flüssigkeitsniveaus vorgesehen ist, wobei vorzugsweise als das erste Strippgas ein Inertgas, Kohlenstoffdioxid oder Stickstoff verwendet wird.

In dem zweiten Raumbereich kann eine zweite Zuleitung für ein zweites Strippgas vorgesehen sein, wobei die zweite Zuleitung unterhalb oder oberhalb eines vorbestimmten zweiten Flüssigkeitsniveaus vorgesehen ist, wobei als das zweite Strippgas ein Inertgas, Kohlenstoffdioxid oder Stickstoff verwendet wird. Durch das Zuführen von Strippgas kann die Entgasung der Flüssigkeit verbessert werden.

Alternativ können eine Zuleitung für Strippgas in dem ersten Raumbereich und eine Abpumpleitung in dem zweiten Raumbereich vorgesehen sein.

In einer anderen Ausführungsform können eine Zuleitung für Strippgas in dem zweiten Raumbereich und eine Abpumpleitung in dem ersten Raumbereich vorgesehen sein.

Es kann vorgesehen sein, dass das erste und/oder zweite Strippgas in Abhängigkeit von Entgasungsanforderungen der Flüssigkeit, z.B. ein minimaler Restgasgehalt, zugeführt wird.

Beispielsweise kann vorgesehen sein, als eine dritte Entgasungsstufe das erste und/oder zweite Strippgas zuzuführen, um einen erforderlichen Restgasgehalt der Flüssigkeit zu erreichen, der beispielsweise lediglich bei Verwendung des zweistufigen Vakuumentgasungsprozesses nicht erreichbar wäre.

Alternativ kann vorgesehen sein, die Entgasungsanlage ohne Ausbilden eines Vakuums in dem ersten und/oder zweiten Raumbereich zu betreiben und eine Entgasung durch Zuführen des ersten und/oder zweiten Stripgases durchzuführen. Dies kann als Druckentgasung bezeichnet werden.

Der zweite Raumbereich kann weiter einen Flüssigkeitsauslass umfassen. Durch den Flüssigkeitsauslass kann die Flüssigkeit, die sich im zweiten Raumbereich befindet, daraus entfernt und weiteren Verarbeitungsprozessen zugeführt werden.

Der Entgasungsbehälter kann liegend ausgebildet sein und das mindestens eine Trennelement als mindestens eine Trennwand einer Höhe in einem unteren Bereich des Entgasungsbehälters angeordnet sein. Das Trennelement kann eine Höhe aufweisen, so dass Flüssigkeit, die sich auf dem Boden und im unteren Bereich des Entgasungsbehälters ansammelt, von dem ersten Raumbereich in den zweiten Raumbereich überlaufen kann, wenn das Flüssigkeitslevel im ersten Raumbereich größer als die Höhe der mindestens einen Trennwand ist.

Alternativ kann der Entgasungsbehälter stehend und das mindestens eine Trennelement als mindestens ein ringförmiger Auffangboden ausgebildet sein. Der mindestens eine ringförmige Auffangboden kann eine Höhe besitzen und in der Mitte einen Durchlass für Flüssigkeit aufweisen. Flüssigkeit, die sich in dem mindestens einen Auffangboden ansammelt, kann von dem mindestens einen Auffangboden, d.h. von dem ersten Raumbereich in den zweiten Raumbereich überlaufen, wenn das Flüssigkeitslevel im dem mindestens einen Auffangboden größer als seine Höhe ist.

Die Steuerungsvorrichtung kann weiter dazu ausgelegt sein, auf eine Datenbank zuzugreifen, die Steuerungsparameter für die Pumpe umfasst, wobei vorzugsweise die Steuerungsparameter flüssigkeitsspezifische Daten umfasst. Die flüssigkeitsspezifischen Daten können Werte für einen zu erreichenden Restsauerstoffgehalt der Flüssigkeit nach dem zweistufigen Vakuumentgasungsprozess umfassen.

Die Entgasungsanlage kann weiter mindestens einen Sensor zum Ermitteln eines Flüssigkeitslevels in dem ersten Raumbereich und vorzugsweise zum Weiterleiten eines Werts des ermittelten Flüssigkeitslevels umfassen. Der Wert des Flüssigkeitslevels kann an die Steuerungsvorrichtung weitergeleitet werden und von ihr als Parameter für den Start oder Stopp des Betriebs der Pumpe verwendet werden.

Die Entgasungsanlage kann weiter mindestens einen Sensor zum Ermitteln eines Flüssigkeitslevels in dem zweiten Raumbereich und vorzugsweise zum Weiterleiten eines Werts des ermittelten Flüssigkeitslevels umfassen. Der Wert des Flüssigkeitslevels kann an die Steuerungsvorrichtung weitergeleitet werden und von ihr als Parameter verwendet werden, beispielsweise um ein Trockenlauf der Pumpe zu vermeiden.

Ein Verfahren zum Durchführen eines Entgasungsprozesses einer Flüssigkeit unter Verwendung einer Entgasungsanlage wie oben oder weiter unten beschrieben, umfasst die Schritte: Einbringen und Versprühen der Flüssigkeit in dem ersten Raumbereich des Entgasungsbehälters mittels der einen oder der mehreren Düsen, wodurch ein zumindest teilweises Entgasen der Flüssigkeit stattfindet und zumindest teilweise entgaste Flüssigkeit erzeugt wird, und ein Ansammeln der zumindest teilweise entgasten Flüssigkeit in dem ersten Raumbereich. Danach erfolgt a) bei Nichtbetreiben der Pumpe, ein Überführen der zumindest teilweise entgasten Flüssigkeit aus dem ersten Raumbereich in den zweiten Raumbereich durch Überfließen der zumindest teilweise entgasten Flüssigkeit über das Trennelement oder erfolgt b) beim Betreiben Pumpe, ein Pumpen der zumindest teilweise entgasten Flüssigkeit über die Leitung von dem ersten Raumbereich zu dem zweiten Raumbereich, ein Einbringen der zumindest teilweise entgasten Flüssigkeit in den zweiten Raumbereich mittels der einen oder der mehreren Düsen, wodurch durch ein weiteres Entgasen eine erneut zumindest teilweise entgaste Flüssigkeit erzeugt wird.

In dem ersten und/oder zweiten Raumbereich kann ein Vakuum mittels einer oder mehrerer Vakuumpumpen ausgebildet werden.

Zudem kann ein Zuführen eines ersten Strippgas in den ersten Raumbereich mittels der ersten Strippgaszuleitung erfolgen.

Zudem kann ein Zuführen eines zweiten Strippgas in den zweiten Raumbereich mittels der zweiten Strippgaszuleitung erfolgen. Durch das Zuführen von Strippgas kann die Entgasungseigenschaft der Flüssigkeit verbessert werden.

Es kann vorgesehen sein, dass das Zuführen des ersten und/oder zweiten Strippgases in Abhängigkeit von Entgasungsanforderungen der Flüssigkeit, z.B. ein minimaler Restgasgehalt, erfolgt.

Beispielsweise kann vorgesehen sein, als eine dritte Entgasungsstufe das erste und/oder zweite Strippgas zuzuführen, um einen erforderlichen Restgasgehalt der Flüssigkeit zu erreichen, der beispielsweise lediglich bei Verwendung des zweistufigen Vakuumentgasungsprozesses nicht erreichbar wäre.

Alternativ kann vorgesehen sein, die Entgasungsanlage ohne Ausbilden eines Vakuums in dem ersten und/oder zweiten Raumbereich zu betreiben und eine Entgasung durch Zuführen des ersten und/oder zweiten Stripgases durchzuführen.

Zudem kann ein Ermitteln eines Flüssigkeitslevels in dem ersten Raumbereich mittels des mindestens einen Sensors erfolgen und vorzugsweise ein Weiterleiten eines Werts des ermittelten Flüssigkeitslevels erfolgen. Der Wert des Flüssigkeitslevels kann an die Steuerungsvorrichtung weitergeleitet werden und von ihr als Parameter für den Start oder Stopp des Betriebs der Pumpe verwendet werden.

Eine Getränkebehandlungsmaschine umfasst die Entgasungsanlage wie oben oder weiter unten beschrieben und eine der Entgasungsanlage nachfolgende Abfüllanlage. Mit der Abfüllanlage kann ein Getränk, ein flüssiges Produkt, oder eine Flüssigkeit, das oder die in der Entgasungsanlage entgast wurde, in Behälter abgefüllt werden.

Die Getränkebehandlungsmaschine kann weiter eine Vorrichtung zum Ausmischen von Getränken/flüssigem Produkt/Flüssigkeit und/oder zur Karbonisierung umfassen, die der Entgasungsanlage nachfolgend angeordnet ist und wobei die Abfüllanlage der Vorrichtung zum Ausmischen von Getränken und/oder zur Karbonisierung nachgeordnet angeordnet ist.

Die beigefügten Figuren stellen beispielhaft zum besseren Verständnis und zur Veranschaulichung Aspekte der Erfindung dar. Es zeigt:
Figur 1A eine erste Ausführungsform einer Entgasungsanlage in einem zweistufigen Vakuumentgasungsprozess,
Figur 1B die erste Ausführungsform in einem einstufigen Vakuumentgasungsprozess,
Figur 2A eine zweite Ausführungsform einer Entgasungsanlage in einem zweistufigen Vakuumentgasungsprozess,
Figur 2B die zweite Ausführungsform in einem einstufigen Vakuumentgasungsprozess und
Figur 3 ein Flussdiagramm eines Verfahrens zum Durchführen eines Entgasungsprozesses einer Flüssigkeit unter Verwendung einer Entgasungsanlage.

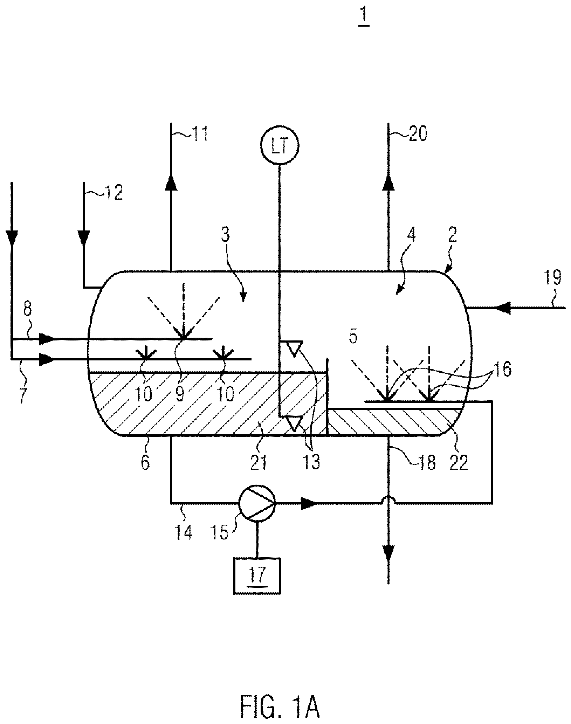

Figur 1A zeigt eine erste Ausführungsform einer Entgasungsanlage 1, die in der Darstellung in einem zweistufigen Vakuumentgasungsprozess betrieben wird. Die Entgasungsanlage 1 umfasst einem Entgasungsbehälter 2, der liegend ausgebildet ist, d.h., die Längsachse des Entgasungsbehälters 2 verläuft horizontal. Der Entgasungsbehälter 2 kann als zwei Raumbereiche 3, 4 umfassend angesehen werden, wobei in einem ersten Raumbereich 3 die erste Stufe der Vakuumentgasung durchgeführt wird und in einem zweiten Raumbereich 4 die zweite Stufe der Vakuumentgasung durchgeführt wird. In der Figur 1A ist der erste Raumbereich 3 auf der linken Seite des dargestellten Entgasungsbehälters 2 und der zweite Raumbereich 4 auf der rechten Seite angeordnet. Der erste Raumbereich 3 und der zweite Raumbereich 4 sind durch ein Trennelement 5 teilweise voneinander getrennt, wobei das Trennelement 5 vom Boden 6 des Entgasungsbehälters 2 nach oben weist. Das Trennelement 5 weist eine Höhe h1 auf, so dass Flüssigkeit, die sich auf dem Boden 6 und im unteren Bereich des Entgasungsbehälters 2 ansammelt, von dem ersten Raumbereich 3 in den zweiten Raumbereich 4 überlaufen kann, wenn das Flüssigkeitslevel im ersten Raumbereich 2 größer als die Höhe h1 ist. Bei dem zweistufigen Entgasungsprozess kann Flüssigkeit von dem zweiten Bereich 4 in den ersten Bereich 3 zurückfließen, wenn über den Ablauf 18 nicht genügend Flüssigkeit entfernt wird und das Flüssigkeitslevel im zweiten Raumbereich 4 ansteigt, so dass es größer als die Höhe h1 ist.

Die Flüssigkeit wird in den ersten Raumbereich 3 mittels zweier Flüssigkeitszuleitungen 7, 8 eingebracht, wobei die eine Flüssigkeitszuleitung 8 eine Düse 9 und die andere Flüssigkeitszuleitung 7 zwei Düsen 10 zum Versprühen der Flüssigkeit aufweist. Zur Erzeugung des Unterdrucks in den ersten Raumbereich 3 ist eine erste Abpumpleitung 11 vorgesehen.

In dem ersten Raumbereich 3 ist zudem eine erste Strippgaszuleitung 12 für eine Zuführung eines ersten Strippgases vorgesehen, wobei die erste Strippgaszuleitung 12 oberhalb eines vorbestimmten ersten Flüssigkeitsniveaus vorgesehen ist.

An den Boden 6 des Entgasungsbehälters 2 ist im ersten Raumbereich 3 eine Leitung 14 angeschlossen, über die bei Betrieb einer Pumpe 15 die Flüssigkeit von dem ersten Raumbereich 3 zu zwei Düsen 16 des zweiten Raumbereichs 4 gepumpt und dort für die zweite Stufe des Entgasungsprozesses versprüht zu werden. Der Betrieb der Pumpe 15 wird mittels einer Steuervorrichtung 17 gesteuert.

Um den Flüssigkeitslevel im ersten Raumbereich 3 ermitteln zu können, sind zwei Sensoren 13 zum Ermitteln des Flüssigkeitslevels und zum Weiterleiten des Ergebnisses, beispielsweise an die Steuervorrichtung 15 zum Steuern des Betriebs der Pumpe 15, vorgesehen. So können beispielsweise zwei Levelsonden oder auch eine kontinuierliche Füllstandmessung verwendet werden.

Der zweite Raumbereich 4 umfasst weiter einen Flüssigkeitsauslass 18, mittels dem Flüssigkeit aus dem zweiten Raumbereich 4 entfernt und beispielsweise weiteren Prozessschritten zugeführt werden kann.

In dem zweiten Raumbereich 4 ist eine zweite Strippgaszuleitung 19 für ein zweites Strippgas vorgesehen, wobei die zweite Strippgaszuleitung 19 oberhalb eines vorbestimmten zweiten Flüssigkeitsniveaus vorgesehen ist. Zur Erzeugung des Unterdrucks in den zweiten Raumbereich 4 ist eine zweite Abpumpleitung 20 vorgesehen.

Für den zweistufigen Vakuumentgasungsprozess wird Flüssigkeit mittels der Düsen 9, 10 in dem ersten Raumbereich 3 in der ersten Stufe der Vakuumentgasung versprüht, so dass eine zumindest teilweise Entgasung der Flüssigkeit stattfindet. Die zumindest teilweise entgaste Flüssigkeit 21 sammelt sich im auf dem Boden 6 und im unteren Bereich des Entgasungsbehälters 2 im ersten Raumbereich 3 an. Zumindest bevor der Flüssigkeitslevel der zumindest teilweise entgasten Flüssigkeit 21 die Höhe h des Trennelements 5 übersteigt, wird mittels der Steuervorrichtung 17 die Pumpe 15 in Betrieb genommen, so dass über die Leitung 14 die zumindest teilweise entgaste Flüssigkeit 21 zu dem zweiten Raumbereich 4 geleitet und dort mittels zweier Düsen 16 in der zweiten Stufe der Vakuumentgasung versprüht. Die zum zweiten Mal entgaste Flüssigkeit 22 sammelt sich im auf dem Boden 6 und im unteren Bereich des Entgasungsbehälters 2 im zweiten Raumbereich 4 an, von wo aus diese Flüssigkeit 22 über den Flüssigkeitsauslass 18 dann weiteren Prozessschritten zugeführt werden kann.

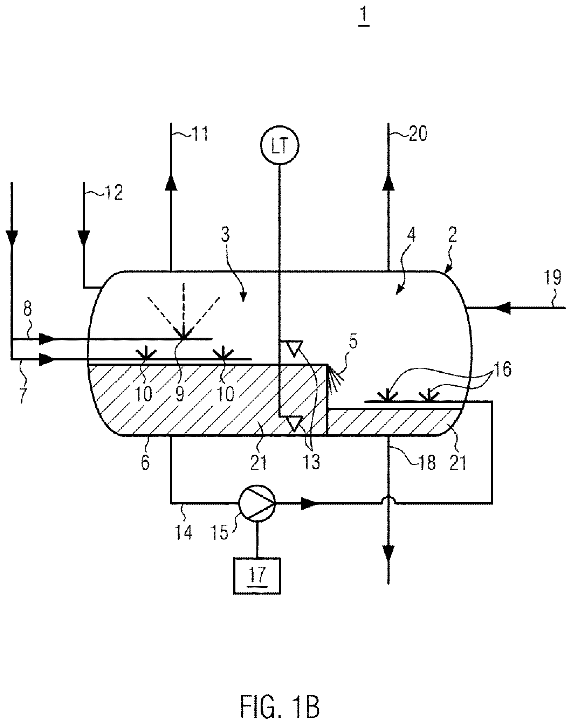

Figur 1B zeigt die erste Ausführungsform der in der Figur 1A beschriebenen Entgasungsanlage 1, die in der Darstellung in einem einstufigen Vakuumentgasungsprozess betrieben wird. Hierbei wird die Pumpe 15 durch die Steuerungsvorrichtung 17 derart angesteuert, dass die Pumpe 15 im Allgemeinen nicht betrieben wird. Lediglich dann, wenn ein Verbleiben der Flüssigkeit in dem ersten Raumbereich 3 und in der Leitung 14 vermieden werden soll, kann es erforderlich sein, dass die Steuerungsvorrichtung 17 die Pumpe 15 derart ansteuert, dass sie betrieben wird.

Für den einstufigen Vakuumentgasungsprozess wird Flüssigkeit mittels der Düsen 9, 10 in dem ersten Raumbereich 3 in der ersten Stufe der Vakuumentgasung versprüht, so dass eine zumindest teilweise Entgasung der Flüssigkeit stattfindet. Die zumindest teilweise entgaste Flüssigkeit 21 sammelt sich im auf dem Boden 6 und im unteren Bereich des Entgasungsbehälters 2 im ersten Raumbereich 3 an. Wenn der Flüssigkeitslevel der zumindest teilweise entgasten Flüssigkeit 21 die Höhe h des Trennelements 5 übersteigt, läuft die zumindest teilweise entgaste Flüssigkeit 21 über das Trennelement 5 über und gelangt so in den zweiten Raumbereich 4. Es erfolgt in dem zweiten Raumbereich 4 keine Versprühung der Flüssigkeit. Lediglich durch das Überfließen der Flüssigkeit über das Trennelement 5 kann es zu einer weiteren, geringfügigen Entgasung kommen, die aber nicht als ein zweiter Entgasungsprozess angesehen wird.

Die in den zweiten Raumbereich 4 übergeflossene zumindest teilweise entgaste Flüssigkeit 21 sammelt sich im auf dem Boden 6 und im unteren Bereich des Entgasungsbehälters 2 im zweiten Raumbereich 4 an, von wo aus diese Flüssigkeit über den Flüssigkeitsauslass 18 dann weiteren Prozessschritten zugeführt werden kann.

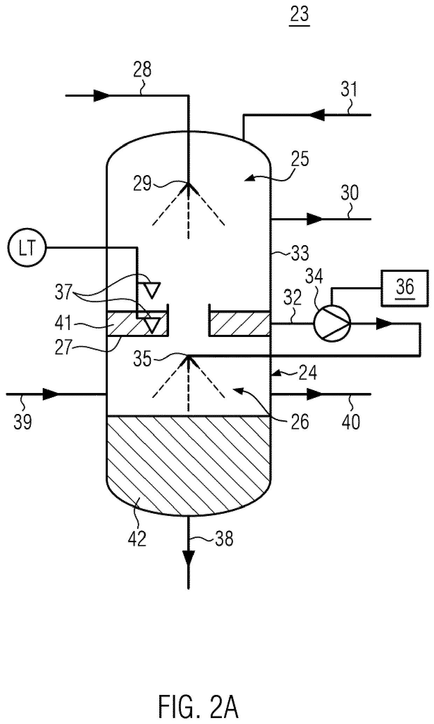

Figur 2A zeigt eine zweite Ausführungsform einer Entgasungsanlage 23, die in der Darstellung in einem zweistufigen Vakuumentgasungsprozess betrieben wird. Die Entgasungsanlage 23 umfasst einem Entgasungsbehälter 24, der stehend ausgebildet ist, d.h., die Längsachse des Entgasungsbehälters 24 verläuft vertikal. Der Entgasungsbehälter 24 kann als zwei Raumbereiche 25, 26 umfassend angesehen werden, wobei in einem ersten Raumbereich 25 die erste Stufe der Vakuumentgasung und in einem zweiten Raumbereich 26 die zweite Stufe der Vakuumentgasung durchgeführt wird. In der Figur 2A ist der erste Raumbereich 25 oberhalb des zweiten Raumbereichs 26 angeordnet. Der erste Raumbereich 25 und der zweite Raumbereich 26 sind durch ein Trennelement 27 teilweise voneinander getrennt. Das Trennelement 27 ist als ein ringförmiger Auffangboden 27 mit einer Höhe h2 ausgebildet, der in der Mitte einen Durchlass für Flüssigkeit aufweist. Flüssigkeit, die sich in dem Auffangboden 27 ansammelt, kann von dem Auffangboden 27, d.h. von dem ersten Raumbereich 25 in den zweiten Raumbereich 26 überlaufen, wenn das Flüssigkeitslevel im dem Auffangboden 27 größer als die Höhe h2 ist.

Die Flüssigkeit wird in den ersten Raumbereich 25 mittels einer Flüssigkeitszuleitung 28 eingebracht, wobei die Flüssigkeitszuleitung 28 eine Düse 29 zum Versprühen der Flüssigkeit aufweist. Zur Erzeugung des Unterdrucks in den ersten Raumbereich 25 ist eine erste Abpumpleitung 30 vorgesehen.

In dem ersten Raumbereich 25 ist zudem eine erste Strippgaszuleitung 31 für ein erstes Strippgas vorgesehen, wobei die erste Strippgaszuleitung 31 oberhalb einer vorbestimmten Höhe über dem Auffangboden 27 vorgesehen ist.

Über eine Leitung 32, die an einer Mantelfläche 33 des Entgasungsbehälters 24 angeordnet ist, kann bei Betrieb einer Pumpe 34 die Flüssigkeit von dem Auffangboden 27 im ersten Raumbereich 25 zu einer Düse 35 des zweiten Raumbereichs 26 gepumpt und dort für die zweite Stufe des Entgasungsprozesses versprüht zu werden. Der Betrieb der Pumpe 34 wird mittels einer Steuervorrichtung 36 gesteuert.

Um den Flüssigkeitslevel auf dem Auffangboden 27 im ersten Raumbereich 25 ermitteln zu können, sind zwei Sensoren 37 zum Ermitteln des Flüssigkeitslevels und zum Weiterleiten des Ergebnisses, beispielsweise an die Steuervorrichtung 36 zum Steuern des Betriebs der Pumpe 34, vorgesehen.

Der zweite Raumbereich 26 umfasst weiter einen Flüssigkeitsauslass 38, mittels dem Flüssigkeit aus dem zweiten Raumbereich 26 entfernt und beispielsweise weiteren Prozessschritten zugeführt werden kann.

In dem zweiten Raumbereich 26 ist eine zweite Strippgaszuleitung 39 für das Zuführen eines zweiten Strippgas vorgesehen, wobei die zweite Strippgaszuleitung 39 oberhalb eines vorbestimmten Flüssigkeitsniveaus vorgesehen ist. Zur Erzeugung des Unterdrucks in dem zweiten Raumbereich 26 ist eine zweite Abpumpleitung 40 vorgesehen.

Für den zweistufigen Vakuumentgasungsprozess wird Flüssigkeit mittels der Düse 29 in dem ersten Raumbereich 25 in der ersten Stufe der Vakuumentgasung versprüht, so dass eine zumindest teilweise Entgasung der Flüssigkeit stattfindet. Die zumindest teilweise entgaste Flüssigkeit 41 sammelt sich im auf dem Auffangboden 27 an. Zumindest bevor der Flüssigkeitslevel der zumindest teilweise entgasten Flüssigkeit 41 die Höhe h2 des Auffangbodens 27 übersteigt, wird mittels der Steuervorrichtung 36 die Pumpe 34 in Betrieb genommen, so dass über die Leitung 32 die zumindest teilweise entgaste Flüssigkeit 41 zu dem zweiten Raumbereich 26 geleitet und dort mittels einer Düse 35 in der zweiten Stufe der Vakuumentgasung versprüht werden kann. Die zum zweiten Mal entgaste Flüssigkeit 42 sammelt sich im unteren Bereich des Entgasungsbehälters 24 im zweiten Raumbereich 26 an, von wo aus diese Flüssigkeit 42 über den Flüssigkeitsauslass 38 dann weiteren Prozessschritten zugeführt werden kann.

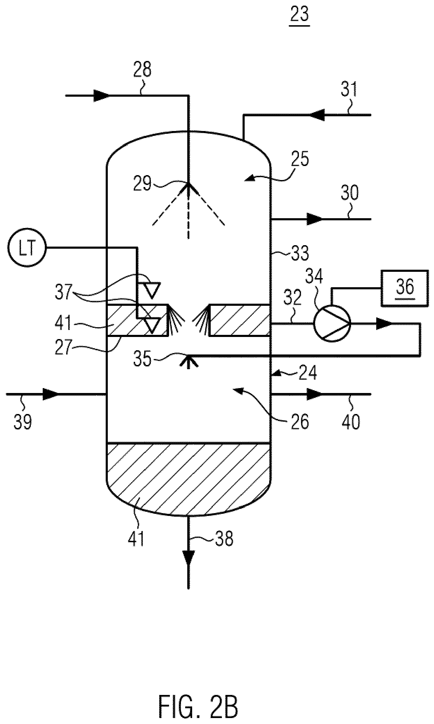

Figur 2B zeigt die zweite Ausführungsform der in der Figur 2A beschriebenen Entgasungsanlage 23, die in der Darstellung in einem einstufigen Vakuumentgasungsprozess betrieben wird. Hierbei wird die Pumpe 34 durch die Steuerungsvorrichtung 36 derart angesteuert, dass die Pumpe 34 im Allgemeinen nicht betrieben wird. Lediglich dann, wenn ein Verbleiben der Flüssigkeit in der Leitung 32 vermieden werden soll, kann es erforderlich sein, dass die Steuerungsvorrichtung 36 die Pumpe 34 derart ansteuert, dass sie betrieben wird.

Für den einstufigen Vakuumentgasungsprozess wird Flüssigkeit mittels der Düse 29 in dem ersten Raumbereich 25 in der ersten Stufe der Vakuumentgasung versprüht, so dass eine zumindest teilweise Entgasung der Flüssigkeit stattfindet. Die zumindest teilweise entgaste Flüssigkeit 41 sammelt sich im auf dem Auffangboden 27 im ersten Raumbereich 25 an. Wenn der Flüssigkeitslevel der zumindest teilweise entgasten Flüssigkeit 41 die Höhe h2 des Auffangbodens 27 übersteigt, läuft die zumindest teilweise entgaste Flüssigkeit 41 über den Auffangboden 27 über und gelangt so in den zweiten Raumbereich 26. Es erfolgt in dem zweiten Raumbereich 26 keine Versprühung der Flüssigkeit. Lediglich durch das Überfließen der Flüssigkeit 41 über den Auffangboden 27 kann es zu einer weiteren, geringfügigen Entgasung kommen, die aber nicht als ein zweiter Entgasungsprozess angesehen wird.

Die in den zweiten Raumbereich 26 übergeflossene zumindest teilweise entgaste Flüssigkeit 41 sammelt sich im unteren Bereich des Entgasungsbehälters 24 im zweiten Raumbereich 26 an, von wo aus diese Flüssigkeit 21 über den Flüssigkeitsauslass 38 dann weiteren Prozessschritten zugeführt werden kann.

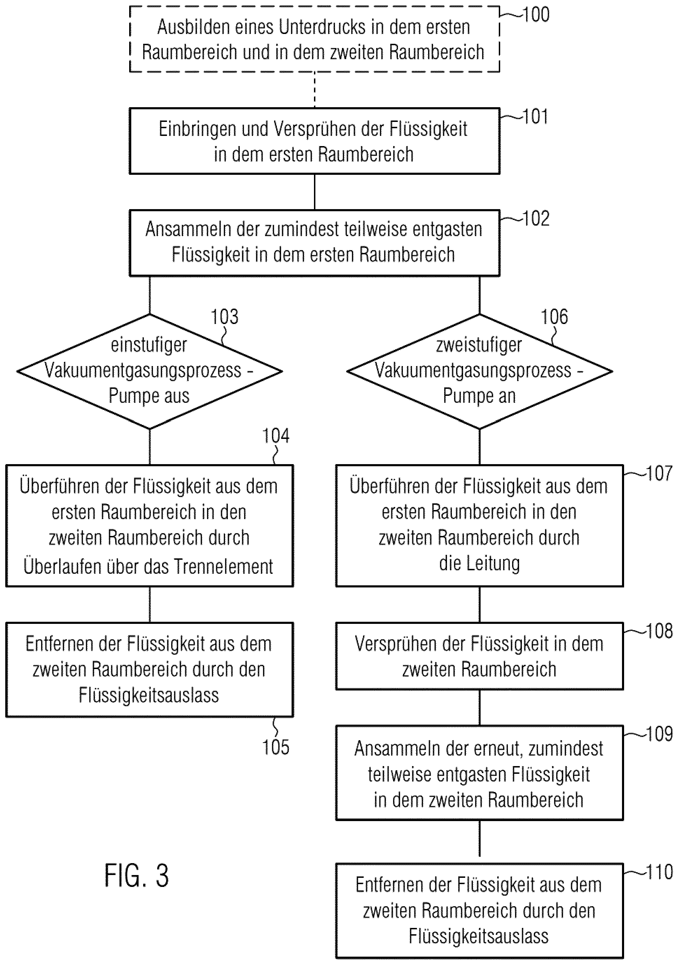

Figur 3 zeigt ein Flussdiagramm eines Verfahrens zum Durchführen eines Entgasungsprozesses einer Flüssigkeit unter Verwendung einer erfindungsgemäßen Entgasungsanlage 1, 23.

Falls in dem Entgasungsbehälter 2, 24 noch keinen Unterdruck vorherrscht, kann in einem optionalen ersten Schritt 100 mittels der ersten Abpumpleitung 11, 30 des ersten Raumbereichs 3, 26 und der zweiten Abpumpleitung 20, 40 des zweiten Raumbereichs 4, 26 ein Unterdruck in dem Entgasungsbehälter 2, 24 ausgebildet werden. Der optional erste Schritt 100 kann auch ein Konstanthalten des Unterdruckes beinhalten.

Danach kann in einem weiteren Schritt 101 ein Einbringen und Versprühen der Flüssigkeit über Flüssigkeitszuleitungen 7, 8, 28 und Düsen 9, 10, 29 in den ersten Raumbereich 3, 25 erfolgen, wodurch eine Entgasung der Flüssigkeit stattfindet. Dadurch erfolgt ein Ansammeln der zumindest teilweise entgasten Flüssigkeit 21, 41 in dem ersten Raumbereich 3, 25.

Wenn ein einstufiger Vakuumsentgasungsprozess 103 erfolgen soll, wird die Pumpe 15, 34 nicht betrieben, so dass in einem Schritt 104 ein Überführen der zumindest teilweise entgasten Flüssigkeit 21, 41 aus dem ersten Raumbereich 3, 25 in den zweiten Raumbereich 4, 26 durch ein Überfließen der zumindest teilweise entgasten Flüssigkeit 21, 41 über das Trennelement 5, 27 erfolgt. In einem Schritt 105 kann die Flüssigkeit aus dem zweiten Raumbereich 4, 26 durch einen Flüssigkeitsauslass 18, 38 entfernt und weiteren Prozessschritten zugeführt werden.

Bei einem einstufigen Vakuumentgasungsprozess kann es ferner auch vorgesehen sein, die Pumpe 15, 34 zeitweise kurzzeitig zu betreiben. Auf diese Weise kann ein Austauschen der Flüssigkeit von dem ersten Raumbereich 3, 25 in den zweiten Raumbereich 4, 26 erfolgen.

Wenn ein zweistufiger Vakuumsentgasungsprozess 106 erfolgen soll, wird die Pumpe 15, 34 betrieben, beispielsweise durch Ansteuerung mittels der Steuerungsvorrichtung 17, 36. Ein Ansteuern der Pumpe 15, 34 mittels der Steuerungsvorrichtung 17, 36 zum Betreiben der Pumpe 15, 34 erfolgt vorzugsweise vor Erreichen eines vorgegebenen Flüssigkeitslevels in dem ersten Raumbereich 3, 25. In einem Schritt 107 erfolgt ein Überführen der zumindest teilweise entgasten Flüssigkeit 21, 41 durch die Leitung 18, 38 von dem ersten Raumbereich 3, 25 zu dem zweiten Raumbereich 4, 26 durch das Betreiben der Pumpe 15, 34. Die zumindest teilweise entgaste Flüssigkeit 21, 41 wird durch die Leitung 18, 31 zu Düsen 16, 35 in dem zweiten Raumbereich 4, 26 überführt und in einem Schritt 108 mittels der einen oder der mehreren Düsen 16, 35 versprüht, wodurch durch ein weiteres Entgasen eine erneut, zumindest teilweise entgaste Flüssigkeit 22, 42 erzeugt wird. Im Schritt 109 erfolgt während des Versprühens der Flüssigkeit ein Ansammeln der erneut, zumindest teilweise entgasten Flüssigkeit 22, 42 in dem zweiten Raumbereich 4, 26. Im Schritt 110 kann aus dem zweiten Raumbereich 4, 26 die erneut, zumindest teilweise entgaste Flüssigkeit über einen Flüssigkeitsauslass 18, 38 entfernt und beispielsweise weiteren Prozessschritten zugeführt werden.

Zudem kann ein Zuführen eines ersten Strippgas in den ersten Raumbereich mittels der ersten Strippgaszuleitung erfolgen.

Zudem kann ein Zuführen eines zweiten Strippgas in den zweiten Raumbereich mittels der zweiten Strippgaszuleitung erfolgen.

Zudem kann ein Ermitteln eines Flüssigkeitslevels in dem ersten Raumbereich mittels des mindestens einen Sensors erfolgen und vorzugsweise ein Weiterleiten eines Werts des ermittelten Flüssigkeitslevels erfolgen.

## Patentansprüche

1. Entgasungsanlage (1, 23) mit einer Steuerungsvorrichtung (17, 36), wobei die Entgasungsanlage (1, 23) einen Entgasungsbehälter (2, 24) mit einem ersten Raumbereich (3, 25), in den Flüssigkeit einbringbar und versprühbar ist, und einem zweiten Raumbereich (4, 26), in den die Flüssigkeit aus dem ersten Raumbereich (3, 25) einbringbar ist, umfasst, wobei eine Leitung (14, 32) zwischen dem ersten Bereich (3, 25) und dem zweiten Bereich (4, 26) vorgesehen ist und wobei der erste Raumbereich (3, 25) und der zweite Raumbereich (4, 26) durch mindestens ein Trennelement (5, 27) teilweise voneinander getrennt sind, wobei das mindestens eine Trennelement (5, 27) derart ausgelegt ist, dass bei dem einstufigen Vakuumentgasungsprozess Flüssigkeit von dem ersten Raumbereich (3, 25) über das mindestens eine Trennelement (5, 27) in den zweiten Raumbereich (4, 26) überfließen kann, und dass bei dem zweistufigen Entgasungsprozess die Flüssigkeit durch das mindestens eine Trennelement (5, 27) in dem ersten Bereich (3, 25) gehalten wird,
**dadurch gekennzeichnet, dass**
eine ansteuerbare Pumpe (15, 34) vorgesehen ist, die dazu ausgelegt ist, bei einem Betreiben der Pumpe (15, 34), für einen zweistufigen Vakuumentgasungsprozess Flüssigkeit von dem ersten Raumbereich (3, 25) durch die Leitung (14, 32) zu dem zweiten Raumbereich (4, 26) zu pumpen und
die Steuerungsvorrichtung (17, 36) dazu ausgelegt ist, die Pumpe (15, 34) derart zu steuern, dass die Pumpe (15, 34) für einen einstufigen Vakuumentgasungsprozess nicht betrieben wird und für einen zweistufigen Vakuumentgasungsprozess betrieben wird.

2. Die Entgasungsanlage nach Anspruch 1, wobei in dem ersten Raumbereich (3, 25) eine erste Strippgaszuleitung (12, 31) für ein Zuführen eines ersten Strippgases vorgesehen ist, wobei die erste Strippgaszuleitung (12, 31) unterhalb oder oberhalb eines vorbestimmten ersten Flüssigkeitsniveaus vorgesehen ist.

3. Die Entgasungsanlage nach einem der Ansprüche 1 bis 2, wobei in dem zweiten Raumbereich (4, 26) eine zweite Strippgaszuleitung (19, 39) für ein Zuführen eines zweiten Strippgases vorgesehen ist, wobei die zweite Strippgaszuleitung (19, 39) unterhalb oder oberhalb eines vorbestimmten zweiten Flüssigkeitsniveaus vorgesehen ist.

4. Die Entgasungsanlage nach einem der Ansprüche 1 bis 3, wobei der zweite Raumbereich (4, 26) weiter einen Flüssigkeitsauslass (18, 38) umfasst.

5. Die Entgasungsanlage nach einem der Ansprüche 1 bis 4, wobei der Entgasungsbehälter (2) liegend ausgebildet ist und das mindestens eine Trennelement (5) als mindestens eine Trennwand mit einer Höhe (h1) von einem Boden (6) des Entgasungsbehälters (2) ausgehend angeordnet ist.

6. Die Entgasungsanlage nach einem der Ansprüche 1 bis 4, wobei der Entgasungsbehälter (24) stehend ausgebildet ist und das mindestens eine Trennelement (27) als mindestens ein Auffangboden ausgebildet ist, wobei vorzugsweise der mindestens eine Auffangboden (27) eine Höhe (h2) besitzt und in der Mitte einen Durchlass für die Flüssigkeit aufweist.

7. Die Entgasungsanlage nach einem der Ansprüche 1 bis 6, wobei die Steuerungsvorrichtung (17, 36) weiter dazu ausgelegt ist, auf eine Datenbank zuzugreifen, die Steuerungsparameter für die Pumpe (15, 34) umfasst, wobei vorzugsweise die Steuerungsparameter flüssigkeitsspezifische Daten umfasst.

8. Die Entgasungsanlage nach einem der Ansprüche 1 bis 7, weiter umfassend mindestens einen Sensor (13, 37) zum Ermitteln eines Flüssigkeitslevels in dem ersten Raumbereich (3, 25) und vorzugsweise zum Weiterleiten eines Werts des ermittelten Flüssigkeitslevels.

9. Verfahren zum Durchführen eines Entgasungsprozesses einer Flüssigkeit unter Verwendung einer Entgasungsanlage (1, 23) nach einem der Ansprüche 1 bis 8, mit den Schritten:
- Einbringen und Versprühen der Flüssigkeit in dem ersten Raumbereich (3, 25) des Entgasungsbehälters (2, 24), wodurch ein zumindest teilweises Entgasen der Flüssigkeit stattfindet und zumindest teilweise entgaste Flüssigkeit (21, 41) erzeugt wird,
- Ansammeln der zumindest teilweise entgasten Flüssigkeit (21, 41) in dem ersten Raumbereich (3, 25),
- a) bei Nichtbetreiben der Pumpe (15, 34), Überführen der zumindest teilweise entgasten Flüssigkeit (21, 41) aus dem ersten Raumbereich (3, 25) in den zweiten Raumbereich (4, 26) durch Überfließen der zumindest teilweise entgasten Flüssigkeit (21, 41) über das mindestens eine Trennelement (5, 27) oder b) beim Betreiben Pumpe (15, 34), Pumpen der zumindest teilweise entgasten Flüssigkeit (21, 41) über die Leitung (14, 32) von dem ersten Raumbereich (3, 25) zu dem zweiten Raumbereich (4, 26), Einbringen der zumindest teilweise entgasten Flüssigkeit (21, 41) in den zweiten Raumbereich (4, 26) mittels der einen oder der mehreren Düsen (16, 35), wodurch durch ein weiteres Entgasen eine erneut zumindest teilweise entgaste Flüssigkeit (22, 42) erzeugt wird.

10. Das Verfahren nach Anspruch 9, wobei zudem ein Zuführen eines ersten Strippgas in den ersten Raumbereich (3, 25) mittels der ersten Strippgaszuleitung (19, 39) erfolgt.

11. Das Verfahren nach Anspruch 9 oder 10, wobei zudem ein Zuführen eines zweiten Strippgas in den zweiten Raumbereich (3, 25) mittels der zweiten Strippgaszuleitung (19, 39) erfolgt.

12. Das Verfahren nach einem der Ansprüche 9 bis 11, wobei zudem ein Ermitteln eines Flüssigkeitslevels in dem ersten Raumbereich (3, 25) mittels des mindestens einen Sensor (13, 37) erfolgt und vorzugsweise ein Weiterleiten eines Werts des ermittelten Flüssigkeitslevels erfolgt.

13. Getränkebehandlungsmaschine mit einer Entgasungsanlage nach einem der Ansprüche 1 bis 8 und mit einer der Entgasungsanlage nachfolgenden Abfüllanlage zum Abfüllen der Flüssigkeit.

14. Die Getränkebehandlungsmaschine nach Anspruch 13, weiter umfassend eine Vorrichtung zum Ausmischen der Flüssigkeit und/oder zur Karbonisierung, die der Entgasungsanlage nachfolgend angeordnet ist und wobei die Abfüllanlage der Vorrichtung zum Ausmischen der Flüssigkeit und/oder zur Karbonisierung nachgeordnet angeordnet ist.

## Claims

1. Degassing system (1, 23) with a control device (17, 36), the degassing system (1, 23) comprising a degassing tank (2, 24) with a first space area (3, 25) in that liquid is introducible and sprayable and a second space area (4, 26) in that the liquid from the first space area (3, 25) is introducible, a pipe (14, 32) being provided between the first area (3, 25) and the second area (4, 26), and the first space area (3, 25) and the second space area (4, 26) being partially separated from one another by at least one separation element (5, 27), wherein the at least one separation element (5, 27) is configured such that, in the single-stage vacuum degassing process, liquid from the first space area (3, 25) can overflow the at least one separation element (5, 27) into the second space area (4, 26) and that, in the two-stage degassing process, the liquid is retained in the first area (3, 25) by the at least one separation element (5, 27),
**characterized in that**
a controllable pump (15, 34) is provided, being configured for pumping liquid from the first space area (3, 25) through the pipe (14, 32) to the second space area (4, 26) for a two-stage vacuum degassing process, when the pump (15, 34) is operated, and
the control device (17, 36) is configured to control the pump (15, 34) such that the pump (15, 34) will not be operated for a single-stage vacuum degassing process and will be operated for a two-stage vacuum degassing process.

2. The degassing system according to claim 1, wherein the first space area (3, 25) has provided therein a first stripping gas feed pipe (12, 31) for feeding a first stripping gas, wherein the first stripping gas feed pipe (12, 31) is provided below or above a predetermined first liquid level.

3. The degassing system according to one of the claims 1 to 2, wherein the second space area (4, 26) has provided therein a second stripping gas feed pipe (19, 39) for feeding a second stripping gas, wherein the second stripping gas feed pipe (19, 39) is provided below or above a predetermined second liquid level.

4. The degassing system according to one of the claims 1 to 3, wherein the second space area (4, 26) further comprises a liquid outlet (18, 38).

5. The degassing system according to one of the claims 1 to 4, wherein the degassing tank (2) is oriented horizontally and the at least one separation element (5) is arranged as at least one partition wall having a height (h1) and extending from a bottom (6) of the degassing tank (2).

6. The degassing system according to one of the claims 1 to 4, wherein the degassing tank (24) is oriented vertically and the at least one separation element (27) is configured as at least one collection tray, wherein, preferably, the at least one collection tray (27) has a height (h2) and a central flow-through opening for the liquid .

7. The degassing system according to one of the claims 1 to 6, wherein the control device (17, 36) is further configured for accessing a database, which comprises control parameters for the pump (15, 34), the control parameters comprising preferably liquid-specific data.

8. The degassing system according to one of the claims 1 to 8, further comprising at least one sensor (13, 37) for determining a liquid level in the first space area (3, 25) and, preferably, for transmitting a value of the liquid level determined.

9. A method of executing a degassing process of a liquid by using a degassing system (1, 23) according to one of the claims 1 to 8, the method comprising the following steps:
- introducing and spraying the liquid in the first space area (3, 25) of the degassing tank (2, 24), whereby the liquid is degassed at least partially and an at least partially degassed liquid (21, 41) is produced,
- accumulation of the at least partially degassed liquid (21, 41) in the first space area (3, 25),
- a) if the pump (15, 34) is not operated, transferring the at least partially degassed liquid (21, 41) from the first space area (3, 25) in the second space area (4, 26) through a flow of the at least partially degassed liquid (21, 41) over the at least one separation element (5, 27) or b) if the pump (15, 34) is operated, pumping the at least partially degassed liquid (21, 41) via the pipe (14, 32) from the first space area (3, 25) to the second space area (4, 26), introducing the at least partially degassed liquid (21, 41) into the second space area (4, 26) by the one or the plurality of nozzles (16, 35), whereby, by further degassing, a liquid (22, 42), which has been degassed once more at least partially, is produced.

10. The method according to claim 9, wherein further a feeding of a first stripping gas into the first space area (3, 25) takes place by the first stripping gas feed pipe (12, 31).

11. The method according to claim 9 or 10, wherein further a feeding of a second stripping gas into the second space area (4, 26) takes place by the second stripping gas feed pipe (19, 39).

12. The method according to one of the claims 9 to 11, wherein further a liquid level in the first space area (3, 25) is determined by a sensor (13, 37) and, preferably, a value of the determined liquid level is transmitted.

13. Beverage treatment machine comprising a degassing system according to one of the claims 1 to 8 and a filling plant arranged downstream of the degassing system and used for filling the liquid.

14. The beverage treatment machine according to claim 13, further comprising a device for mixing the liquid and/or for carbonation, which is arranged downstream of the degassing system, and wherein the filling plant is arranged downstream of the device for mixing the liquid and/or for carbonation.

## Revendications

1. Installation de dégazage (1, 23) avec un dispositif de commande (17, 36), dans lequel l'installation de dégazage (1, 23) comprend un récipient de dégazage (2, 24) avec une première zone spatiale (3, 25) dans laquelle du liquide peut être introduit et pulvérisé, et une seconde zone spatiale (4, 26), dans lequel le liquide de la première zone spatiale (3, 25) peut être introduit, une conduite (14, 32) étant prévue entre la première zone (3, 25) et la seconde zone (4, 26) et la première zone spatiale (3, 25) et la seconde zone spatiale (4) étant disposées de telle sorte que le liquide de la première zone spatiale (3, 25) peut être introduit dans la seconde zone spatiale (4), 26) sont partiellement séparés les uns des autres par au moins un élément de séparation (5, 27), ledit au moins un élément de séparation (5, 27) étant conçu de telle sorte que, dans le processus de dégazage sous vide en une étape, le liquide peut déborder de la première zone spatiale (3, 25) par l'intermédiaire dudit au moins un élément de séparation (5, 27) dans la seconde zone spatiale (4, 26), et que, dans le processus de dégazage en deux étapes, le liquide est maintenu dans la première zone (3, 25) par l'au moins un élément de séparation (5, 27),
**caractérisé en ce que**
une pompe contrôlable (15, 34) est prévue, qui est conçue, lorsque la pompe (15, 34) est actionnée, pour pomper du liquide pour un processus de dégazage sous vide en deux étapes depuis la première zone spatiale (3, 25) à travers le conduit (14, 32) vers la seconde zone spatiale (4, 26) et
le dispositif de commande (17, 36) est conçu pour commander la pompe (15, 34) de telle sorte que la pompe (15, 34) ne fonctionne pas pour un processus de dégazage sous vide en une étape et fonctionne pour un processus de dégazage sous vide en deux étapes.

2. Installation de dégazage selon la revendication 1, dans laquelle une première conduite d'alimentation en gaz de strippage (12, 31) destinée à fournir un premier gaz de strippage est prévue dans la première zone spatiale (3, 25), dans lequel la première conduite d'alimentation en gaz de strippage (12, 31) est prévue en dessous ou au-dessus d'un premier niveau de liquide prédéterminé.

3. Installation de dégazage selon l'une quelconque des revendications 1 à 2, dans laquelle une seconde conduite d'alimentation en gaz de strippage (19, 39) pour l'alimentation d'un second gaz de strippage est prévue dans la seconde zone spatiale (4, 26), la second conduite d'alimentation en gaz de strippage (19, 39) étant prévue en dessous ou au-dessus d'un second niveau de liquide prédéterminé.

4. Installation de dégazage selon l'une des revendications 1 à 3, la seconde zone de la pièce (4, 26) comprenant une autre sortie de liquide (18, 38).

5. Installation de dégazage selon l'une des revendications 1 à 4, dans laquelle le récipient de dégazage (2) est conçu en position horizontale et le au moins un élément de séparation (5) est disposé comme au moins une paroi de séparation d'une hauteur (h1) partant d'un fond (6) du récipient de dégazage (2).

6. Installation de dégazage selon l'une des revendications 1 à 4, dans laquelle le récipient de dégazage (24) est construit verticalement et le au moins un élément de séparation (27) est construit comme au moins un bac collecteur, dans lequel de préférence le au moins un bac collecteur (27) a une hauteur (h2) et a un passage pour le liquide au milieu.

7. Installation de dégazage selon l'une quelconque des revendications 1 à 6, dans laquelle le dispositif de commande (17, 36) est en outre conçu pour accéder à une base de données comprenant des paramètres de commande pour la pompe (15, 34), de préférence les paramètres de commande comprennent des données spécifiques au fluide.

8. Installation de dégazage selon l'une quelconque des revendications 1 à 7, comprenant en outre au moins un capteur (13, 37) pour détecter un niveau de liquide dans la première zone spatiale (3, 25) et de préférence pour transmettre une valeur du niveau de liquide détecté.

9. Procédé de mise en oeuvre d'un processus de dégazage d'un liquide à l'aide d'un appareil de dégazage (1,23) selon l'une quelconque des revendications 1 à 8, comprenant les étapes suivantes
- l'introduction et la pulvérisation du liquide dans la première zone spatiale (3, 25) du récipient de dégazage (2, 24), de sorte qu'un dégazage au moins partiel du liquide a lieu et qu'un liquide au moins partiellement dégazé (21, 41) est produit,
- l'accumulation du liquide au moins partiellement dégazé (21, 41) dans la première zone spatiale (3, 25),
- a) lorsque la pompe (15, 34) n'est pas actionnée, transfert du liquide au moins partiellement dégazé (21, 41) de la première zone spatiale (3, 25) dans la seconde zone spatiale (4, 26) par débordement du liquide au moins partiellement dégazé (21, 41) par l'intermédiaire de l'élément de séparation (5, 27) au nombre d'au moins un, ou b) lorsque la pompe (15, 34) est actionnée, pompage du liquide au moins partiellement dégazé (21, 41) par la conduite (14, 32) allant de la première zone spatiale (3, 25) à la seconde zone spatiale (4, 26), en introduisant le liquide au moins partiellement dégazé (21, 41) dans la seconde zone spatiale (4, 26) au moyen d'une ou plusieurs buses (16, 35), un nouveau dégazage produisant un liquide renouvelé au moins partiellement dégazé (22, 42).

10. Procédé selon la revendication 9, dans lequel en outre une alimentation d'un premier gaz de stripping dans la première zone spatiale (3, 25) est effectuée au moyen de la première conduite d'alimentation en gaz de stripping (19, 39).

11. Procédé selon les revendications 9 ou 10, dans lequel en outre un second gaz de stripping est amené dans la seconde zone spatiale (3, 25) au moyen de la second conduite d'alimentation en gaz de stripping (19, 39).

12. Procédé selon l'une des revendications 9 à 11, dans lequel en outre une détermination d'un niveau de liquide dans la première zone spatiale (3, 25) est effectuée au moyen d'au moins un capteur (13, 37) et de préférence une transmission d'une valeur du niveau de liquide déterminé est effectuée.

13. Machine de traitement de boissons avec une installation de dégazage selon l'une des revendications 1 à 8 et avec une installation de remplissage en aval de l'installation de dégazage pour le remplissage du liquide.

14. Machine de traitement de boissons selon la revendication 13, comprenant en outre un dispositif pour mélanger le liquide et/ou pour la carbonatation, qui est disposé en aval de l'installation de dégazage et dans laquelle l'installation de remplissage est disposée en aval du dispositif pour mélanger le liquide et/ou pour la carbonatation.
